# EUROPEAN PATENT SPECIFICATION

(11) **EP 3 369 547 B1**
(45) Date of publication and mention of the grant of the patent: **30.12.2020**
(21) Application number: 16859402.6
(22) Date of filing: 02.09.2016
(51) Int. Cl.: B29C 48/92, B29C 48/29, B29C 44/42, B29C 45/56, B29C 44/58, B29C 45/17

(54) **FOAM MOLDING MANUFACTURING METHOD**
VERFAHREN ZUR HERSTELLUNG VON SCHAUMFORMTEILEN
PROCÉDÉ DE FABRICATION DE PIÈCES MOULÉES DE MOUSSE

(30) Priority: 30.10.2015 JP 2015214752
(43) Date of publication of application: 05.09.2018
(73) Proprietor: Bando Chemical Industries, Ltd., Kobe-shi, Hyogo 650-0047 (JP)
(72) Inventor: ICHIKI, Tomohito, Kobe-shi Hyogo 650-0047 (JP); JINDAI, Saki, Kobe-shi Hyogo 650-0047 (JP)
(74) Representative: Cabinet Beau de Loménie
(86) International application number: PCT/JP2016/075854
(87) International publication number: WO 2017/073165

(56) References cited:
- EP-A1- 1 806 217
- EP-A1- 2 746 025
- WO-A1-2012/091003
- JP-A- 2001 277 281
- JP-A- 2011 025 450

## Description

### TECHNICAL FIELD

The present invention relates to methods for manufacturing a molded foam product.

### BACKGROUND ART

Molded foam products are featured with, for example, a light weight, reduced amounts of materials used, and excellent heat insulation. Molded foam products are therefore used in various applications such as food containers, daily necessities, and home appliances.

Molded foam products can be typically manufactured by causing a resin composition injected into a mold to foam while molding the resin composition. Known methods to cause foaming are, for example, a method decomposing a foaming agent in a resin composition and a method injecting gas into a resin composition. There is also a recently studied method which injects a fluid in a supercritical state into a resin composition. Also, known methods for molding a resin composition include injection molding, for example. These methods for manufacturing a molded foam product are disclosed in, for example, Patent Literatures 1 to 4.

### CITATION LIST

### - Patent Literature

Patent Literature 1: JP 2002-067111 A
Patent Literature 2: JP 2003-231148 A
Patent Literature 3: JP 5283710 B
Patent Literature 4: JP 2010-173238 A

EP 2 746 025 A1 shows a method according to the preamble of claim 1.

### SUMMARY OF INVENTION

### - Technical Problem

In manufacture of a molded foam product, control of foaming is important. For example, uniform formation of fine air bubbles in a resin composition is required. The method injecting a fluid in a supercritical state into the resin composition is considered effective in this respect. This method, however, causes difficulty in control of foaming when molded products are designed to have a reduced thickness to achieve a light weight and reduction in the amounts of materials used, for example. Control failure causes problems such as that molded products have poor surface smoothness due to foaming and/or include a portion with no air bubbles (unfoamed portion).

Patent Literature 4 suggests formation of a thick portion in a region directly below a gate formed in a mold for injection foam molding so that the manufactured injection molded foam products, especially those having a complicated shape or a large size, include a uniformly and finely foamed layer that exhibits a high foaming magnification and excellent surface smoothness. This method, however, needs improvement in forming a large amount of fine air bubbles in a thin molded product, which is for sufficient heat insulation, and how to control foaming in such a thin molded product. For example, Patent Literature 4 discloses that preferred structures include those with two or more gates and those with a belt-shaped thick portion. The inventors have studied these structures and have found that the structures are unfortunately not suited for manufacture of a thin molded product.

The present invention has been made in view of the above current state of the art, and aims to provide a method for manufacturing a molded foam product which can reduce blisters on the surface and foaming failure in injection molding of a molten resin containing a fluid in a supercritical state even in the case of manufacturing a molded product designed to have a small thickness, thereby giving a molded foam product having excellent heat insulation.

### - Solution to Problem

The inventors have focused on a method including injection molding of a molten resin containing a fluid in a supercritical state. This method can produce a molded foam product having excellent heat insulation when it includes the step of moving a portion of a mold to increase the volume of a cavity before the molten resin injected into the cavity of the mold completely solidifies. The inventors have made further studies and found that when a molten resin is injected into the cavity of the mold through multiple injection ports, the resulting molded product has wide-ranging blisters on the surface and unfoamed portions at points where flow fronts of the molten resin injected through the respective injection ports meet in the cavity. These defects occur especially in a thin molded product. The inventors have therefore decided to form a single injection port for the cavity. Yet, with this structure, the injection pressure within the cavity may be high and the flow fronts of the molten resin may cause small-scale collision in the cavity. This structure has therefore failed to reduce blisters on the surface of a molded product and unfoamed portions. In order to solve this problem, the inventors have formed a dimple as a resin pool (hereinafter also referred to simply as a "dimple") having a specific substantially hemispherical shape in this structure such that the dimple faces the injection port in the mold. Here, the minimum gap size in the cavity of the mold during injection of the molten resin was set to 0.2 mm or greater. The resulting specific structure gives excellent heat insulation to the manufactured molded foam products while reducing blisters on the surface and foaming failure. Thereby, the inventors have completed the present invention, which is defined in the claims.

Preferably, the molded foam product has a cup shape with a base and a side surface, and the resin injection port is situated to come into contact with the base.

### - Advantageous Effects of Invention

The method for manufacturing a molded foam product according to the present invention can reduce blisters on the surface and foaming failure in injection molding of a molten resin containing a fluid in a supercritical state even in the case of manufacturing a molded product designed to have a small thickness, thereby giving a molded foam product having excellent heat insulation.

### BRIEF DESCRIPTION OF DRAWINGS

Fig. 1 is a schematic view illustrating an exemplary method for manufacturing a molded foam product using a supercritical injection molding apparatus.
Fig. 2 includes enlarged schematic cross-sectional views of a portion including the cavity of the mold shown in Fig. 1 for illustration of a core-back process; Fig. 2(a) shows the initial state before the core-back process, and Fig. 2(b) shows an expanded state after the core-back process.
Fig. 3 is an enlarged schematic cross-sectional view of a portion including the cavity of the mold shown in Fig. 1 for illustration of the dimension of each component of the mold.
Fig. 4 shows an exemplary molded foam product having a cup shape which is manufactured by the method of the present invention.
Fig. 5 is an enlarged schematic cross-sectional view of a portion of a molded foam product manufactured by the method of the present invention.
Fig. 6 is a schematic cross-sectional view showing the shape and dimension of molded foam products produced in

### Examples 1 to 11 and Comparative Examples 1 and 3.

Fig. 7 is a schematic cross-sectional view showing the shape and dimension of molded foam products produced in Comparative Examples 2 and 4.

### DESCRIPTION OF EMBODIMENTS

The method for manufacturing a molded foam product according to the present invention is a method for manufacturing a molded foam product through injection molding of a molten resin containing a fluid in a supercritical state, the method including a step of injecting the molten resin into a cavity formed in a mold and moving a portion of the mold to increase the volume of the cavity before the molten resin injected into the cavity completely solidifies, the cavity being communicated only with a single resin injection port, the mold having a dimple which has a substantially hemispherical shape and is situated to face the resin injection port, the mold having a minimum gap size of 0.2 mm or greater in the cavity during injection of the molten resin.

Molded foam products herein are manufactured through injection molding of a molten resin containing a fluid in a supercritical state (hereinafter also referred to as a "supercritical fluid"). Examples of the molten resin containing a supercritical fluid include a molten resin composition impregnated with a supercritical fluid. Preferred is a single-phase melt of a resin composition and a supercritical fluid. Such a molten resin can be produced by injecting a supercritical fluid generated by a known supercritical fluid generator into a molten resin composition under high pressure, and further stirring the mixture. The supercritical fluid can be, for example, a supercritical fluid of an inert gas such as carbon dioxide, nitrogen, argon, or helium. In particular, a supercritical fluid of carbon dioxide or nitrogen is preferred, and a supercritical fluid of nitrogen is more preferred. The resin composition to be impregnated with the supercritical fluid is described in detail below.

The injection molding includes injecting a molten resin containing a supercritical fluid into a cavity of a mold, followed by causing the resin to cool and solidify. This enables manufacture of molded products having fine and various shapes according to the shape of the cavity of the mold. Also, when the pressure onto the molten resin containing a supercritical fluid is dropped during injection molding, a phase transition of the supercritical fluid to the gaseous phase occurs, generating air bubbles in the molten resin. Thereby, a molded foam product containing fine air bubbles is obtained. With a large number of points where foaming starts (foaming points) uniformly distributed in the molten resin, the amount of air bubbles can be increased.

The present invention includes the process of moving a portion of the mold to increase the volume of the cavity before the molten resin injected into the cavity completely solidifies (hereinafter, this step is also referred to as a "core-back process"). When the cavity is forcibly expanded in the state where the molten resin is partially or wholly melted, a rapid pressure drop is caused, so that the foaming amount is significantly increased. This process can generate air bubbles throughout the entire inside of the molten resin injected into the cavity. The mold typically includes a male mold having a protruding shape and a female mold having a recessed shape. The space formed by the male mold and the female mold fitted to each other constitutes the cavity into which the molten resin is injected. At least a portion of the male mold and/or the female mold is moved to increase the volume of the cavity. Here, in cases where the male mold is a movable component and the female mold is a stationary component, the entire male mold is preferably moved to increase the volume of the cavity.

The core-back process is preferably started within the range of immediately after injection of the molten resin into the cavity is completed (zero seconds after completion of the injection) to five seconds after completion of the injection. The mold is preferably moved at a moving speed (core-back process speed) of 0.1 mm/sec or faster. The expansion amount of the gap size of the mold by the core-back process (i.e., core-back process range) is preferably from 0.5 mm to 10 mm.

The production of the molten resin containing a supercritical fluid and foam molding of the molten resin can be conducted with, for example, a supercritical injection molding apparatus including an injection molding machine and a supercritical fluid generator connected to each other. Examples of the supercritical injection molding apparatus include a MuCell injection molding machine (MuCell is a registered trademark of Trexel. Co., Ltd.).

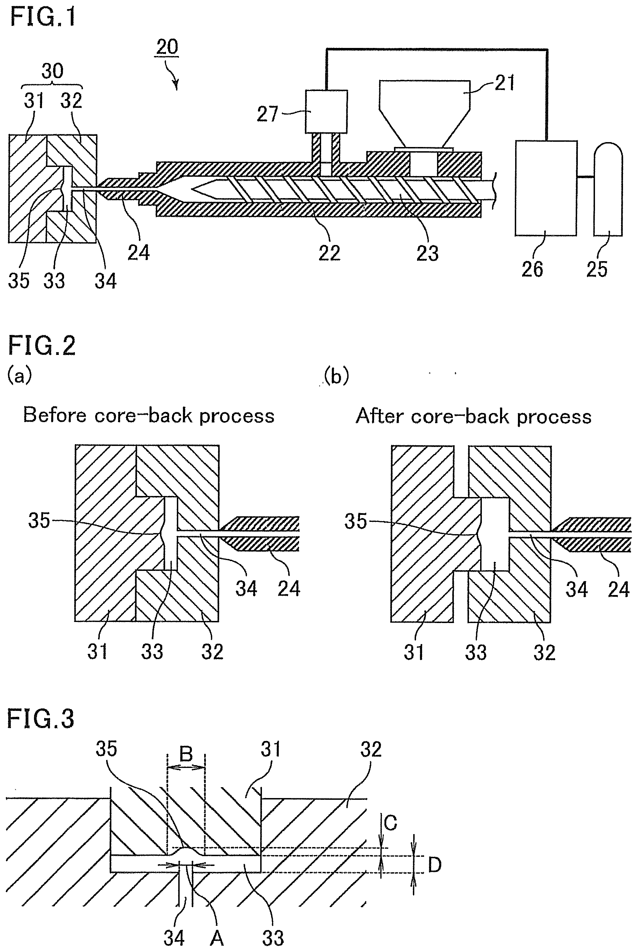

Fig. 1 is a schematic view illustrating an exemplary method for manufacturing a molded foam product using a supercritical injection molding apparatus. A supercritical injection molding apparatus 20 shown in Fig. 1 includes an injection molding machine connected to a supercritical fluid generator. The injection molding machine includes a hopper 21, a heating cylinder 22, a screw 23, and a nozzle 24. The supercritical fluid generator includes a gas bottle 25, a supercritical fluid generator 26, and an injection controller 27.

The hopper 21 includes a vessel that stores a resin material fed into the hopper 21 and drops an appropriate amount of the resin material into the heating cylinder 22 through its bottom opening, which is closable. Examples of the resin material fed into the hopper 21 include pellets of a resin composition produced by melt-kneading a mixture of ingredients with an extruder. Non-limiting examples of the extruder include uniaxial or multiaxial various extruders. Preferred are, for example, biaxial extruders whose temperature is set to 200°C or higher. The ingredients may be kneaded batchwise, or desired ingredients may be kneaded first and then may be kneaded together with the rest of the ingredients. The heating cylinder 22 is capable of heating the inside of a cylindrical space and melting the resin material.

The gas bottle 25 encloses an inert gas which is an ingredient of the supercritical fluid. The inert gas is introduced from the gas bottle 25 to the supercritical fluid generator 26 where the gas becomes a supercritical fluid. The supercritical fluid generated in the supercritical fluid generator 26 is fed into the heating cylinder 22 through the injection controller 27. The injection controller 27 is configured to control the amount of the supercritical fluid to be injected into the resin material that is melt in the heating cylinder 22.

The screw 23 is movable while turning inside the heating cylinder 22 and is configured to push the molten resin material and the supercritical fluid, while blending them together, to the end of the heating cylinder 22. The blending produces a single-phase melt of the molten resin material and the supercritical fluid (i.e., molten resin containing a supercritical fluid). The molten resin containing a supercritical fluid is pushed and transported to the nozzle 24 by the screw 23, so that the molten resin containing a supercritical fluid is injected into the mold 30 through the nozzle 24 at an appropriate injection rate.

The mold 30 includes a male mold 31 having a protruding shape and a female mold 32 having a recessed shape. The male mold 31 and the female mold 32 form a cavity 33 in between. The molten resin coming out of the nozzle 24 is injected into the cavity 33 through a runner 34. The pressure is dropped in the mold 30, and when the pressure reaches the critical pressure, a phase transition of the supercritical fluid to the gaseous phase occurs, generating air bubbles in the molten resin. Then, as shown in Fig. 2, the male mold 31 is moved back before the molten resin cools and solidifies, so that the cavity 33 is expanded, i.e., the core-back process is performed. This accelerates the pressure drop in the mold and thereby promotes foaming in the molten resin in the cavity 33. Fig. 2 includes enlarged schematic cross-sectional views of a portion including the cavity of the mold shown in Fig. 1 for illustration of the core-back process; Fig. 2(a) shows the initial state before the core-back process, and Fig. 2(b) shows an expanded state after the core-back process.

The cavity 33 herein is communicated only with a single resin injection port (hereinafter, also referred to as a "gate"). This configuration prevents collision of flow fronts of the molten resin injected through separate injection ports within the cavity 33, thereby preventing blisters on the surface of the molded product and foaming failure over a wide range of the molded product.

Fig. 3 is an enlarged schematic cross-sectional view of a portion including the cavity of the mold shown in Fig. 1 for illustration of the dimension of each component of the mold. As shown in Fig. 3, the mold herein has a dimple 35 which has a substantially hemispherical shape and is situated to face the resin injection port (situated to face the resin injection port across the cavity 33). This configuration avoids excessive increase in the injection pressure within the cavity 33 and small-scale collision of flow fronts of the molten resin within the cavity 33 in the case of a single resin injection port, thereby sufficiently preventing blisters on the surface and foaming failure. The dimple 35 here may be situated such that at least a portion of its aperture faces the resin injection port. Preferably, the dimple 35 is situated such that the center of its aperture faces the resin injection port and, more preferably, the center of its aperture faces the center of the resin injection port. The "dimple having a substantially hemispherical shape" may be any depression that has a substantially circular aperture and tends to decrease in area in the depth direction, as viewed from the direction of the resin injection port. Here, the "substantially circular" shape is most preferably a circle, but may be any shape that is substantially equated with a circle and can achieve the effect of a circle. The shape preferably includes no acute angles, and may be an ellipse with a ratio of its minor axis to its major axis of greater than 1/2, for example.

The dimple 35 preferably has the maximum depth C that is 1/2 or smaller of the gap size (distance between the male mold and the female mold) D of the mold around the dimple 35 before the core-back process. This configuration more effectively prevents blisters on the surface and foaming failure while keeping the size of the mark (thick portion) of the dimple 35 formed in the molded foam product to the minimum necessary. Thereby, a molded foam product having excellent appearance can be manufactured. The dimple 35 is considered to function to first receive a flow of the molten resin injected into the cavity 33 and control the flow of the molten resin to spread the molten resin over the entire inside of the cavity 33. This means that, in the case where the gap size D of the mold around the dimple 35 is large, the maximum depth C of the dimple 35 is preferably increased such that the amount of the molten resin flowing into the dimple 35 is increased in order to prevent cases where the flow of the molten resin is not controlled in the dimple 35. The function of the dimple 35 to control the flow of the molten resin, however, may be poor if the dimple 35 has the maximum depth C that is greater than 1/2 of the gap size D of the mold.

The dimple 35 preferably has an aperture area that is equal to or greater than the aperture area of the resin injection port. The dimple 35 having such an aperture area can receive the molten resin injected through the resin injection port with a higher degree of reliability, more effectively preventing blisters on the surface and foaming failure.

The mold 30 has a minimum gap size of 0.2 mm or greater in the cavity 33 during injection of the molten resin (before the core-back process). The gap size of the mold 30, in the cavity 33 defining the shape of a molded foam product 10, defines the thickness of the molded foam product. The mold 30 having a gap size smaller than 0.2 mm may fail to cause sufficient foaming in the molten resin, producing a product that includes an unfoamed portion with no air bubbles. An unfoamed portion has no effect of heat insulation owing to air bubbles and thus exhibits insufficient heat insulation. Also, the molded foam product 10, when uncolored, typically appears white because light is scattered by air bubbles, whereas the unfoamed portion appears transparent. This means that formation of an unfoamed portion gives a non-uniform appearance to the molded foam product 10. The mold preferably has a gap size of 3 mm or smaller. In portions of the mold where the gap size is greater than 3 mm, the time required for cooling and solidification is longer. With such a portion, the molded foam product 10 may be deformed in ejection of the molded product from the mold 30 or due to foam residues (foamable portions in the molten resin which has insufficiently solidified). Also, foaming comparatively easily occurs in such a portion. Hence, with a gap size greater than 3 mm, the mold configuration of the present invention will be less advantageous. The mold therefore preferably has a gap size that falls within the range of 0.2 to 3.0 mm. The present invention can prevent blisters on the surface and foaming failure even in the case of manufacturing a molded foam product 10 designed to have a small thickness, so that the manufactured molded foam product 10 has a light weight and excellent heat insulation as compared with conventional products.

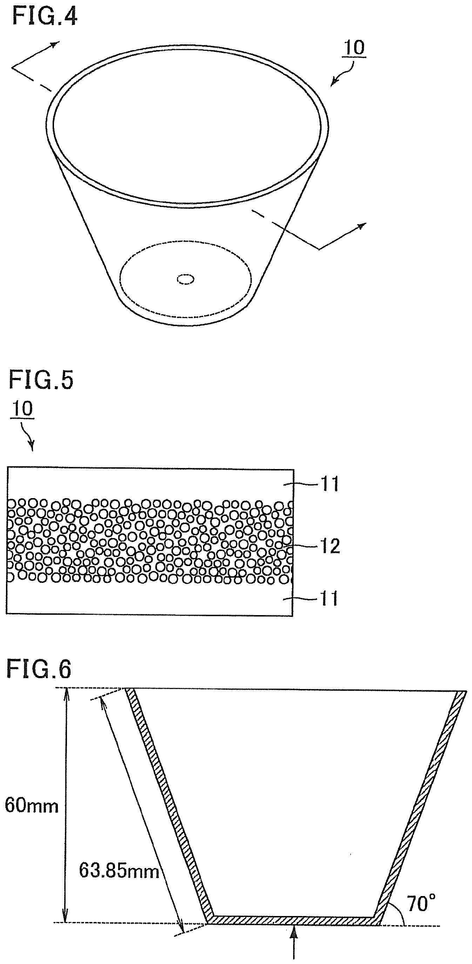

The molded foam product may have any shape, but preferably has a cup shape with a base and a side surface. This is because the molded foam product can exhibit heat insulation owing to air bubbles and is thus suitable as a heat-resistant container. Fig. 4 shows an exemplary molded foam product having a cup shape which is manufactured by the method of the present invention. In the case of manufacturing the molded foam product 10 having a cup shape, the resin injection port may be situated to come into contact with the side surface or with the base, but is preferably situated to come into contact with the base. This configuration can spread the molten resin to the entire inside of the cavity 33 radially from the resin injection portion at a constant speed, thereby effectively preventing blisters on the surface and foaming failure.

The molded foam product 10 having a cup shape preferably has an angle formed by the side surface and the base of 5° or greater but smaller than 90°. The lower limit of the angle formed by the side surface and the base is more preferably 45°. The height from the base is preferably 5 mm or higher but 60 mm or shorter. The lower limit of the height from the base is more preferably 10 mm. Furthermore, the side surface and the base each preferably have a linear portion whose length is preferably 5 mm or longer but 30 mm or shorter. The lower limit of the length of the linear portion is more preferably 10 mm. With a cup shape having dimensions falling within the above respective ranges, the molded foam product 10 sufficiently achieves the effect of the present invention of preventing molding failure and foaming failure.

Fig. 5 is an enlarged schematic cross-sectional view of a portion of a molded foam product manufactured by the method of the present invention. The molded foam product 10 shown in Fig. 5 has a structure in which a foamed layer 12 is sandwiched between skin layers (outer skin layers) 11 constituting the surfaces of the molded foam product 10. The foamed layer 12 refers to a region containing a large number of air bubbles (foamed particles) in the resin. The skin layers 11 each refer to a region containing no air bubbles. The molded foam product 10 has a high strength and a smooth surface owing to the skin layers 11 on its surface. The molded foam product 10 not only has a reduced weight but also is less heat conductive owing to the foamed layer 12 in the center portion, and therefore has excellent heat resistance. The molded foam product 10 shown in Fig. 5 is an exemplary molded foam product manufactured by the method of the present invention. Molded foam products manufactured by the method of the present invention may have any structure other than the three-layer structure of the skin layer 11/the foamed layer 12/the skin layer 11.

The foamed layer 12 preferably contains 100 or more foamed particles in a 1 mm × 1 mm region of the foamed layer 12 in observation of a cross section of the molded foam product 10. Any randomly selected 100 foamed particles preferably have an average particle size of 100 pm or smaller. The foamed particles can be measured with a scanning electron microscope (SEM) such as "S-4800" available from Hitachi High-Technologies Corporation.

The resin composition to be impregnated with a supercritical fluid is described in detail below.

The resin composition used is one mainly containing a thermoplastic resin, for example. In particular, a mixture of a polyolefin, a polylactic acid, and a modified polyolefin having a carbonyl group in a molecule is suitable. The polyolefin and the polylactic acid are incompatible polymers which do not dissolve in each other and, when blended with each other, form an interface between them without dissolving in each other. Such an interface can therefore be utilized as a point where foaming starts (foaming point) in foaming using a supercritical fluid. Meanwhile, in order to manufacture a uniformly foamed molded foam product, the components need to be uniformly dispersed in the resin composition before foaming. Addition of the modified polyolefin containing a carbonyl group makes the polyolefin and the polylactic acid compatible with each other, increasing the dispersibility. This process produces a large number of fine air bubbles (foamed particles having a small particle size) uniformly inside the molded foam product, enabling manufacture of a molded foam product excellent in properties such as heat resistance, strength, and lightness.

The polyolefin may contain one or both of polypropylene and polyethylene. The polypropylene has a melt mass-flow rate (MFR) of preferably from 5 to 100 g/10 min, more preferably from 10 to 50 g/10 min. The MFR of polypropylene is a value measured at a temperature of 230°C and a load of 21.2 N in accordance with JIS K7210. The polyethylene has an MFR of preferably from 5 to 100 g/10 min, more preferably from 10 to 50 g/10 min. The MFR of polyethylene is a value measured at a temperature of 190°C and a load of 21.2 N in accordance with JIS K7210.

The polyolefin may contain at least one of polypropylene and polyethylene alone, or may also contain polyolefin polymers other than polypropylene and polyethylene.

Examples of the other polyolefin species include α-olefin homopolymers, ethylene-propylene copolymers, ethylene-α-olefin copolymers, and propylene-α-olefin copolymers. Examples of the α-olefin include C4-C12 α-olefins such as 1-butene, 1-pentene, 3-methyl-1-butene, 1-hexene, 3-methyl-1-pentene, 4-methyl-1-pentene, 3-ethyl-1-pentene, 1-octene, 1-decene, and 1-undecene.

The polyolefin preferably has a melt viscosity (220°C) of from 150 Pa·S to 400 Pa·S. The lower limit of the melt viscosity of the polyolefin is more preferably 200 Pa·S, and the upper limit thereof is more preferably 300 Pa·S. The melt viscosity can be measured with a "flow tester CFT-500D" available from Shimadzu Corporation, for example. Specifically, the viscosity characteristics can be evaluated by heating the resin under measurement to a given temperature to fluidize the resin, extruding the resin out of a cylinder through a capillary die (inner diameter: ϕ1 mm, length: 10 mm) using a piston at a given surface pressure (1 MPa), and measuring the distance and time for the piston movement.

The resin composition contains preferably from 30 to 80 wt% polyolefin. If the resin composition contains less than 30 wt% polyolefin, the resin composition may exhibit poor fluidity, decreased solidification speed, and poor moldability. If the resin composition contains more than 80 wt% polyolefin, the resin composition may exhibit poor foamability to give protrusions and recesses to the surface of the resulting molded foam product, spoiling the appearance. Also, in the case of blending the resin composition and a supercritical fluid, the resin composition is less likely to be impregnated with the supercritical fluid. The lower limit of the amount of the polyolefin in the resin composition is preferably 35 wt%, and the upper limit thereof is preferably 70 wt%.

The polylactic acid is an L-lactic acid or D-lactic acid homopolymer, an L-lactic acid/D-lactic acid copolymer, or any mixture of such homopolymers and copolymers. The crystallinity of the polylactic acid can be adjusted by copolymerizing (e.g., random, block, graft copolymerizing) lactic acid enantiomers with different enantiomeric ratios or by adding a crystal nucleating agent.

The polylactic acid has a melt viscosity (220°C) of from 150 Pa·S to 400 Pa·S. The lower limit of the melt viscosity of the polylactic acid is more preferably 200 Pa· S, and the upper limit thereof is more preferably 300 Pa·S. The melt viscosity of the polylactic acid can be measured by a procedure similar to that of measuring the melt viscosity of the polyolefin.

The resin composition contains preferably from 3 to 40 wt% polylactic acid. If the resin composition contains less than 3 wt% polylactic acid, the molded foam product obtained by foam molding the resin composition may be in an insufficiently foamed state. If the resin composition contains more than 40 wt% polylactic acid, the resin composition may exhibit poor fluidity, decreased solidification speed, and poor moldability. The lower limit of the amount of the polylactic acid in the resin composition is more preferably 8 wt%, and the upper limit thereof is more preferably 30 wt%.

With the amounts of the polyolefin and the polylactic acid falling within the ranges of 30 to 80 wt% and of 3 to 40 wt%, respectively, the fluidity of the resin composition can be adjusted, and the resin composition can exhibit favorable moldability.

The difference in melt viscosity between the polyolefin and the polylactic acid is preferably 200 Pa·S or less. With a difference in melt viscosity between the polyolefin and the polylactic acid of 200 Pa·S or less, these components can be more easily blended. The upper limit of the difference in melt viscosity between the polyolefin and the polylactic acid is more preferably 150 Pa·S.

The process of blending polymers incompatible with each other may be a process in which a chemical bond is formed between the components or a process in which a crosslinked structure is formed between polymers of the same species. In the case of obtaining a molded foam product using a polylactic acid, reactive extrusion (reactive processing) may be employed in which, for example, the composition is kneaded while a polylactic acid is synthesized using additives such as a synthetic catalyst (e.g., metal complex) and a radical generator. In the case of utilizing the interfaces between the polyolefin and the polylactic acid as points where foaming starts, addition of additives such as a synthetic catalyst and a radical generator to the resin composition is not necessary, unlike the reactive extrusion in which the composition is kneaded while the polylactic acid is synthesized. Examples of the reactive extrusion of a polylactic acid include a process in which L-lactide and ε-caprolactone are reacted using tin(II) 2-ethylhexanoate serving as the synthetic catalyst and an antioxidant (e.g., IRGANOX 1010 available from Ciba Specialty Chemicals); a process in which a polylactic acid and polyethylene glycol are reacted using a radical generator such as dicumyl peroxide; and a process in which a polymer such as polycarbonate, polybutylene adipate terephthalate (PBAT), polycaprolactone (PCL), polybutylene succinate (PBS), or polybutylene succinate adipate (PBSA) is graft-polymerized onto a polylactic acid using a radical generator.

Examples of the modified polyolefin containing a carbonyl group in a molecule include those obtained by addition reaction of a polyolefin with an unsaturated carboxylic acid, an ester of an unsaturated carboxylic acid, or an anhydride of an unsaturated carboxylic acid.
Examples of the unsaturated carboxylic acid include maleic acid, fumaric acid, and itaconic acid. Examples of the ester of an unsaturated carboxylic acid include monomethyl maleate, monoethyl maleate, diethyl maleate, and monomethyl fumarate. Examples of the anhydride of an unsaturated carboxylic acid include itaconic anhydride and maleic anhydride. Examples of the modified polyolefin containing a carbonyl group in a molecule include maleic anhydride-modified polyolefins and glycidyl methacrylate-modified polyolefins. These modified polyolefins containing a carbonyl group in a molecule may be used alone or in combination.

The modified polyolefin containing a carbonyl group in a molecule may be a copolymer of an olefin and a vinyl monomer. Examples of the copolymer of an olefin and a vinyl monomer include ethylene-(meth)acrylic acid copolymers, ethylene-ethyl (meth)acrylate copolymers, and ethylene-methyl (meth)acrylate copolymers. The "(meth)acrylic acid" may be acrylic acid or methacrylic acid.

The modified polyolefin containing a carbonyl group in a molecule has an MFR of preferably from 0.1 to 100 g/10 min, more preferably from 0.3 to 50 g/10 min. The MFR is a value measured at a temperature of 230°C and a load of 21.2 N in accordance with JIS K7210.

The resin composition contains preferably from 1 to 20 wt% modified polyolefin containing a carbonyl group in a molecule. In the case where the resin composition contains the modified polyolefin containing a carbonyl group in a molecule in an amount within the above range, an interface can be formed between the polyolefin and the polylactic acid which are incompatible with each other, so that the dispersibility concerning these components can be improved. If the resin composition contains less than 1 wt% modified polyolefin containing a carbonyl group in a molecule, the resulting molded foam product may be in a poorly foamed state. If the resin composition contains more than 20 wt% modified polyolefin, odor emission, coloring, moldability deterioration, or a water absorption increase may occur. The lower limit of the amount of the modified polyolefin containing a carbonyl group in a molecule in the resin composition is more preferably 3 wt%, and the upper limit thereof is more preferably 12 wt%.

The resin composition may contain a layered silicate. In the case where the shear force during blending the polyolefin, the polylactic acid, and the modified polyolefin containing a carbonyl group is insufficient, adding a layered silicate improves the dispersion concerning the polyolefine and the polylactic acid, thereby highly dispersing foaming points in the resin composition.

Examples of the layered silicate include pyrophyllite, talc, kaolin (kaolinite), montmorillonite, apophyllite, margarite, prehnite, and mica. In particular, talc, kaolin, montmorillonite, and mica are suitable. These layered silicates may be used alone or in combination.

The resin composition contains preferably from 10 to 40 wt% layered silicate. If the resin composition contains less than 10 wt% layered silicate, the effect of enhancing the shear force during blending may be insufficient. If the resin composition contains more than 40 wt% layered silicate, the resin composition may exhibit poor moldability. The lower limit of the amount of the layered silicate in the resin composition is more preferably 15 wt%, and the upper limit thereof is more preferably 35 wt%.

The resin composition may contain a filler other than the layered silicate. The filler, in the case of being formed of an inorganic material, may be, for example, a metal oxide (e.g., magnesium oxide, calcium oxide), graphite, carbon black, molybdenum disulfide, tungsten disulfide, calcium carbonate, silica, silica gel, zeolite, boron nitride, or alumina. The filler, in the case of being formed of an organic material, may be, for example, a fluorine resin (e.g., polytetrafluoroethylene (PTFE)), ultrahigh molecular weight polyethylene, electron beam-crosslinked polyethylene, an aromatic polyamide, an aliphatic polyamide, silicon carbide, an acrylic resin, a phenolic resin, or a melamine resin. The resin composition may contain any amount of the filler other than the layered silicate as long as the amount does not exceed 1 wt% of the resin composition, for example.

Random patterns, colors, or letters, for example, may be provided to the surface or any other part of the molded foam product. In the case of providing such patterns, additives such as pigment filler and a color masterbatch can be added to the resin composition.

Molded foam products manufactured by the method of the present invention may be used without any limitation. Yet, since the molded foam products are excellent in heat resistance and heat insulation and have a light weight, they are suitable as, for example, products such as food containers, daily necessities, and home appliances. The molded foam product has excellent heat resistance and passes the following JIS S2029 tests: 7.4 Heat resistance test (heat-resistant temperature on the label: 120°C); 7.10 Test of suitability for high frequency of microwave oven; and 7.11 Test of durability in a microwave oven. Hence, food containers formed of the molded foam product can be heated in a microwave or used for microwave cooking.

### EXAMPLES

Hereinafter, the present invention is described in more detail based on examples. The examples, however, are not intended to limit the scope of the present invention.

### (Example 1)

Polypropylene (50 wt%), a polylactic acid (20 wt%), a modified polyolefin containing a carbonyl group in a molecule (10 wt%), and talc (20 wt%) were dry-blended, and then kneaded with a twin-screw extruder ("TEX30" available from The Japan Steel Works, Ltd.) whose temperature was set to 220°C, so that a foamable resin composition in the form of pellets was obtained. The obtained foamable resin composition contained the polylactic acid particles dispersed in polypropylene. The following Table 1 shows the manufacturers and physical properties of the ingredients.

**[Table 1]**

| | Manufacturer | Product No. | Physical property |
|---|---|---|---|
| Polypropylene (polyolefin) | Prime Polymer Co., Ltd. | J106G | MFR (230°C): 15 g/10 min |
| | | | Melt viscosity (220°C): 390 Pa· S |
| Polylactic acid | Unitika Ltd. | TERRAMAC TE-2000 | MFR (190°C): 12 g/10 min |
| | | | Melt viscosity (220°C): 260 Pa·S |
| Modified polyolefin containing carbonyl group In molecule | Prime Polymer Co., Ltd. | ZP648 | MFR (230°C): 0.6 g/10 min |
| Talc (layered silicate) | Nippon Talc Co., Ltd. | P-3 | Density: 2.70 g/cm³ |

The obtained pellets of the foamable resin composition were fed into an injection molding machine equipped with a supercritical generator (Toshiba Machine Co., Ltd.). The foamable resin composition was blended with a supercritical fluid of nitrogen (N₂) (filling amount: 0.2 wt%, filling pressure: 16 MPa) while being melted in a cylinder whose temperature was set to 200°C. The filling amount (unit: wt%) of the supercritical fluid can be calculated from the following formula (1). $Filling amount \left(unit:wt%\right) of supercritical fluid = \left[\left(flow rate of supercritical fluid\times inlet time of supercritical fluid\times conversion factor 27.8\right)/weight of foamable resin composition\right] \times 100$ (1)

The molten resin blended with a supercritical fluid was injected into the cavity 33 of the mold having the shape shown in Fig. 3 through one gate (resin injection port) at an injection rate of 80 mm/sec and a screw backpressure of 15 MPa. The gate had an aperture shape of a circle with a diameter A of ϕ3 mm (aperture area: 7.1 mm²). The mold temperature was 60°C. The mold had the dimple 35 having a substantially hemispherical shape situated to face the gate. The dimple 35 had a maximum depth C of 0.4 mm. The mold had a minimum gap size in the cavity 33 of 0.2 mm and a gap size (distance between the male mold and the female mold) D around the dimple 35 of 0.8 mm before the core-back process. The dimple 35 had an aperture shape of a circle with a diameter B of ϕ1.75 mm (aperture area: 9.6 mm²).

Immediately after the molten resin was completely injected into the cavity 33, the core-back process was conducted. Specifically, the male mold 31 of the mold was moved back 3 mm to increase the volume of the cavity 33, so that foaming in the molten resin was accelerated. After the molten resin completely solidified, the molded foam product was taken out.

The molded foam product produced in the present example had a cup shape with a base and a side surface as shown in Fig. 4 and was controlled to have a minimum thickness of 0.2 mm. Fig. 6 is a schematic cross-sectional view showing the shape and dimension of the molded foam product produced in Example 1 as viewed in the direction indicated by the double-headed arrow in Fig. 4. The obtained molded foam product had, as shown in Fig. 6, a cup shape with a height of 60 mm, a length of the linear portion of the side surface of 63.85 mm, and an angle formed by the base and the side surface of 70°. As indicated by the arrow in Fig. 6, the gate was situated to come into contact with the center of the base of the molded foam product 10. Also, as shown in Fig. 5, the molded foam product 10 had the skin layer 11 on each surface of the foamed layer 12.

### (Examples 2 to 11 and Comparative Examples 1 to 4)

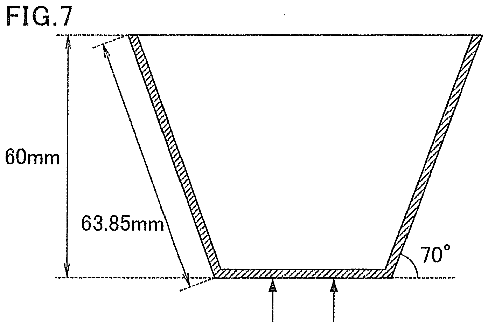

A molded foam product was produced as in Example 1, except that the number of gates, aperture area, gap size in the cavity of the mold before the core-back process, and provision and dimension of the dimple were varied as shown in the following Table 2. In Comparative Examples 2 and 4, the molten resin was injected into the cavity of the mold through two gates. Fig. 7 is a schematic cross-sectional view showing the shape and dimension of molded foam products produced in Comparative Examples 2 and 4. The two gates in Comparative Examples 2 and 4 were situated as indicated by the arrows in Fig. 7. The shape and dimension of each of the two gates were the same as those of the gate used in Example 1.

### (Evaluation on molded foam product)

The heat insulation and appearance of the molded foam products produced in the examples and comparative examples were evaluated by the following methods. The results are shown in the following Table 2.

### (1) Heat insulation evaluation

Each molded foam product was sprayed with a black body spray ("THI-1B" available from Tasco Japan Co. Ltd.) and the solvent contained in the black body spray was dried indoors over a time period within the range of 12 hours to 24 hours. Thereby, a black-colored measurement sample having a cup shape was produced. Into the measurement sample was poured boiling water (100 ml) and, three minutes later, the temperature of the outer surface of the measurement sample was measured with an infrared thermometer ("TVS-200" available from Nippon Avionics Co., Ltd.) whose emissivity was controlled to 0.94.

The measurement sample was evaluated as good (marked as "○○") when the measured surface temperature was 60°C or lower, evaluated as fair (marked as "○") when the measured surface temperature was higher than 60°C but 65°C or lower, and evaluated as poor (marked as "×") when the measured surface temperature was higher than 65°C.

### (2) Appearance evaluation

In each of the examples and comparative examples, 100 samples of the molded foam product were prepared. The appearance of the samples was visually observed.

### (2-1) Formation of blisters on surface

The molded foam product was evaluated as accepted (marked as "o") when none of its samples had any blister on the surface, and evaluated as rejected (marked as "x") when one or more of its samples had a blister on the surface.

### (2-2) Inclusion of unfoamed portion

The molded foam product was evaluated as accepted (marked as "o") when none of its samples included any unfoamed portion, and evaluated as rejected (marked as "x") when one or more of its samples included an unfoamed portion. An unfoamed portion can be distinguished from a foamed portion as a foamed portion in the molded foam product appears white while an unfoamed portion appears transparent or translucent.

**[Table 2]**

| | Gate | | Gap size of mold | | Dimple | | Heat insulation | Unfoamed portion | Blister on product surface |
|---|---|---|---|---|---|---|---|---|---|
| | Number of gates | Cross-sectional area (mm²) | Minimum (mm) | Around gate (mm) | Aperture area (mm²) | Maximum depth (mm) | | | |
| Example 1 | 1 | 7.1 | 0.2 | 0.8 | 9.6 | 0.4 | ○○ | ○ | ○ |
| Example 2 | 1 | 7.1 | 0.4 | 0.8 | 12.6 | 0.4 | ○○ | ○ | ○ |
| Example 3 | 1 | 7.1 | 0.8 | 0.8 | 9.6 | 0.4 | ○○ | ○ | ○ |
| Example 4 | 1 | 7.1 | 0.8 | 0.8 | 9.6 | 0.05 | ○○ | ○ | ○ |
| Example 5 | 1 | 7.1 | 1.2 | 1.2 | 9.6 | 0.7 | ○○ | ○ | ○ |
| Example 6 | 1 | 7.1 | 0.4 | 0.4 | 9.6 | 0.2 | ○○ | ○ | ○ |
| Example 7 | 1 | 7.1 | 0.3 | 0.3 | 7.1 | 0.1 | ○○ | ○ | ○ |
| Example 8 | 1 | 3.1 | 0.8 | 0.8 | 7.1 | 0.4 | ○○ | ○ | o |
| Example 9 | 1 | 7.1 | 0.8 | 0.8 | 7.1 | 0.6 | ○ | ○ | ○ |
| Example 10 | 1 | 3.1 | 2.5 | 2.5 | 0.8 | 0.8 | ○ | ○ | ○ |
| Example 11 | 1 | 3.1 | 1.2 | 1.2 | 4.9 | 0.8 | ○ | ○ | ○ |
| Comparative Example 1 | 1 | 7.1 | 0.8 | 0.8 | No dimple | | × | × | × |
| Comparative Example 2 | 2 | 7.1 | 0.8 | 0.8 | 4.9 | 0.4 | ○ | × | × |
| Com parative Example 3 | 1 | 7.1 | 0.15 | 0.15 | 9.6 | 0.05 | × | × | ○ |
| Comparative Example 4 | 2 | 7.1 | 0.8 | 0.8 | No dimple | | × | × | × |

- 10: Molded foam product
- 11: Skin layer (outer skin layer)
- 12: Foamed layer
- 20: Supercritical injection molding apparatus
- 21: Hopper
- 22: Heating cylinder
- 23: Screw
- 24: Nozzle
- 25: Gas bottle
- 26: Supercritical fluid generator
- 27: Injection controller
- 30: Mold
- 31: Male mold
- 32: Female mold
- 33: Cavity
- 34: Runner
- 35: Dimple

## Claims

1. A method for manufacturing a molded foam product (10) through injection molding of a molten resin containing a fluid in a supercritical state, the method comprising
a step of injecting the molten resin into a cavity (33) formed in a mold (30) having a dimple (35) and moving a portion of the mold to increase the volume of the cavity before the molten resin injected into the cavity completely solidifies,
the cavity (33) being communicated only with a single resin injection port (34) which is situated to face the dimple (35)
**characterized by**
a minimum gap size of 0.2 mm or greater of the mold (30) in the cavity (33) during injection of the molten resin and a substantially hemispherical shape of the dimple which is a circle or an ellipse with a ratio of its minor axis to its major axis of greater than 1/2 and tends to decrease in area in the depth direction, as viewed from the direction of the resin injection port, or has a maximum depth that is 1/2 or smaller of the gap size of the mold around the dimple or has an aperture area that is equal to or greater than the aperture area of the resin injection port (34).

2. The method for manufacturing a molded foam product (10) according to claim 1,
wherein the molded foam product (10) has a cup shape with a base and a side surface, and
the resin injection port (34) is situated to come into contact with the base.

## Patentansprüche

1. Verfahren zur Herstellung eines geformten Schaumstoffprodukts (10) mittels Spritzgießen eines geschmolzenen Harzes, das ein Fluid in einem überkritischen Zustand enthält, wobei das Verfahren umfasst:
einen Schritt des Einspritzens des geschmolzenen Harzes in einen Hohlraum (33), der in einer Form (30) ausgebildet ist und eine Mulde (35) aufweist, und des Bewegens eines Teils der Form, um das Volumen des Hohlraums zu vergrößern, bevor das in den Hohlraum eingespritzte geschmolzene Harz sich vollständig verfestigt,
wobei der Hohlraum (33) lediglich mit einer einzigen Harzeinspritzöffnung (34) verbunden ist, die so angeordnet ist, dass sie der Mulde (35) gegenüberliegt,
**gekennzeichnet durch**
eine minimale Spaltgröße von 0,2 mm oder mehr der Form (30) in dem Hohlraum (33) während des Einspritzens und eine im Wesentlichen hemisphärische Form der Mulde, die ein Kreis oder eine Ellipse mit einem Verhältnis ihrer Nebenachse zu ihrer Hauptachse von mehr als 1/2 ist und deren Fläche aus der Richtung der Einspritzöffnung betrachtet tendenziell in der Tiefenrichtung abnimmt oder die eine maximale Tiefe aufweist, die 1/2 oder weniger beträgt als die Spaltgröße der Form um die Mulde herum, oder die einen Öffnungsbereich aufweist, der gleich oder größer ist als der Öffnungsbereich der Harzeinspritzöffnung (34).

2. Verfahren zur Herstellung eines geformten Schaumstoffprodukts (10) nach Anspruch 1,
wobei das geformte Schaumstoffprodukt (10) eine Becherform mit einem Boden und einer Seitenfläche aufweist und
die Harzeinspritzöffnung (34) so angeordnet ist, dass sie mit dem Boden in Kontakt kommt.

## Revendications

1. Procédé pour la fabrication d'un produit de mousse moulé (10) par moulage par injection d'une résine fondue contenant un fluide dans un état supercritique, le procédé comprenant
une étape d'injection de la résine fondue dans une cavité (33) formée dans un moule (30) ayant un creux (35) et de déplacement d'une portion du moule pour augmenter le volume de la cavité avant que la résine fondue injectée dans la cavité se solidifie complètement,
la cavité (3) étant en communication uniquement avec un orifice d'injection de résine unique (34) qui est situé pour faire face au creux (35)
**caractérisé par**
une dimension d'espace minimale de 0,2 mm ou supérieure du moule (30) dans la cavité (33) pendant l'injection de la résine fondue et une forme sensiblement hémisphérique du creux qui est un cercle ou une ellipse avec un rapport de son axe mineur à son axe majeur supérieur à 1/2 et a tendance à diminuer en surface dans la direction de profondeur, comme vue à partir de la direction de l'orifice d'injection de résine, ou présente une profondeur maximale qui est de 1/2 ou inférieure de la dimension d'espace du moule autour du creux ou présente une surface d'ouverture qui est supérieure ou égale à la surface d'ouverture de l'orifice d'injection de résine (34).

2. Procédé pour la fabrication d'un produit de mousse moulé (10) selon la revendication 1,
dans lequel le produit de mousse moulé (10) présente une forme de bol avec une base et une surface latérale, et
l'orifice d'injection de résine (34) est situé pour entrer en contact avec la base.
